# EUROPEAN PATENT APPLICATION

(11) **EP 2 063 404 A1**
(43) Date of publication of application: **27.05.2009**
(21) Application number: 07121467.0
(22) Date of filing: 23.11.2007
(51) Int. Cl.: G08G 1/04, G06T 7/00

(54) **A detector for detecting traffic participants.**

(71) Applicant: Traficon, 8560 Wevelgem (BE)
(72) Inventor: Deruytter, Michael, 8560, WEVELGEM (BE); Jamee, Peter, 8560, WEVELGEM (BE); Versavel, Jo, 8560, WEVELGEM (BE)
(74) Representative: Quintelier, Claude

(57) **Abstract**

A detector for detecting traffic participants, said detector comprising a first and a second camera provided for operating in stereovision and output respectively first and second pixel-data relating to recorded traffic pictures of a monitored traffic zone, said detector comprises a memory provided for storing picture parameters delimiting a predetermined section within said traffic zone, said section being covered by NxM pixels, said picture parameters further comprise a sampling pattern defining a sequence of pixels to be sampled within said traffic zone, said detector further comprises sampling means provided for sampling said first and second pixel-data according to said sampling pattern and output for each sampled pixel within said first respectively said second pixel-data a first and second pixel-data value, said detector further comprises deviation determining means provided for pixel-wise determining a deviation between said first and second pixel-data value and forming thereby a resulting pixel-data value, said detector comprising an analyser provided for analysing said resulting pixel-data value in order to apply a threshold operation on said resulting pixel-data value and output a threshold signal upon detecting a presence of resulting pixel-data value matching said threshold operation.

## Description

The present invention relates to a detector for detecting traffic participants, in particular pedestrians, said detector comprising a first and a second camera provided for operating in stereovision and output respectively first and second pixel-data relating to recorded traffic pictures of a monitored traffic zone.

Such a detector is well known and used for monitoring traffic. The use of a first and a second camera, provided for operating in stereovision, enables to construct three dimensional information about the monitored traffic. Such three dimensional information is useful and necessary as it enables to distinguish between real objects and shadow images. Reliable information about the monitored traffic is thus obtained.

A drawback of the known detectors is however that some complex and time consuming calculation is required on the pixel-data to obtain high reliable information. Such detectors are therefore often quite expensive. Moreover traffic monitoring has often to cope with rapidly changing situations and should therefore be able to react quickly and operate at low costs.

The object of the present invention is to realise a detector for detecting traffic participants which is reliable, quick and at reduced costs.

For this purpose a detector according to the invention comprises a memory provided for storing picture parameters delimiting a predetermined section within said traffic zone, said section being covered by NxM pixels, said picture parameters further comprise a sampling pattern defining a sequence of pixels to be sampled within said traffic zone in such a manner that an (i,j)th (1≤i≤N, 1≤j≤M) to be sampled pixel in said first and second pixel-data corresponds to a same (i,j)th geographical location within said section, said detector further comprises sampling means provided for sampling said first and second pixel-data according to said sampling pattern and output for each (i,j)th sampled pixel within said first respectively said second pixel-data a first and second (i,j)th pixel-data value, indicating a pixel value for the pixel-data at the (i,j)th geographical location, said sampling means being connected to said memory, which comprises a first and a second data-field and is provided for storing therein said first and second pixel-data values, said detector further comprises deviation determining means connected to said memory and provided for pixel-wise determining a deviation between said first and second pixel-data value and forming thereby a resulting pixel-data value, said deviation determining means being connected to an analyser provided for analysing said resulting pixel-data value in order to apply a threshold operation on said resulting pixel-data value and output a threshold signal upon detecting a presence of resulting pixel-data value -matching said threshold operation. The use of a section enables to delimit a particular and -relevant section within the traffic zone, in which section the traffic is then monitored. The sampling according to the sampling pattern, performed by the sampling means, enables to obtain pixel-data values of particular geographical locations corresponding to position co-ordinates in the monitored traffic section. In such a manner, the (i,j)th first and the second pixel-data value correspond to a same geographical location in the monitored traffic section. As the cameras operate in stereovision, a height component in an object located within the monitored section will lead to different pixel-data values between the first and second pixel-data values. --Since all pixels defining the ground surface will transform in a similar manner during the sampling and since three dimensional objects are considered, only those which have a height component will positively contribute to the threshold operation. By now applying a threshold operation on the first and second pixel-data values, only those objects having a height component will cause a threshold signal generation. In such a manner, a reliable fast and non-expensive detector is obtained.

A first preferred embodiment of a detector according to the present invention is characterised in that said sampling pattern comprises a first and a second vector (v̅1̅, v̅2̅) defined in said section and forming a normalised reference frame in said section in such a manner that said (i,j)th geographical position is identifiable by a vector co-ordinate set v1ᵢ,v2ⱼ in said normalised reference frame, and wherein said sampling means are provided for vector co-ordinate-wise sampling said first and second pixel-data and output for each vector co-ordinate set v1ᵢ,v2ⱼ said first and second pixel-data value, indicating said pixel value for the pixel-data at the position corresponding to said vector co-ordinate set. The use of vectors enables a convenient realisation of the sampling pattern.

A second preferred embodiment of a detector according to the present invention is characterised in that said memory comprises a sub-field, provided for storing therein, under control of said threshold signal, each time the (i,j)th location associated to said resulting pixel-data value having caused said matching of said threshold operation, said analyser being further provided for verifying if within an area formed by i±k and j±k (1≤k≤K) locations situated around the (i,j)th location stored in said sub-field there are location stored in said sub-field and for outputting a confirmation signal if there are such location stored in said sub-field. Since an object will generally extend over a plurality of neighbouring co-ordinates due to its width, the verification over neighbouring co-ordinates i±k and j±k (1≤k≤K) enables to more efficiently and reliably detect traffic participants.

A third preferred embodiment of a detector according to the present invention is characterised in that said detector comprises an image memory provided for storing said first and second pixel-data according to pixel addresses allocated to said image, said sampling means comprises a conversion table provided for converting said pixel address into a sampling address formed on the basis of said sample pattern, said sampling means being provided for executing said sampling by converting the pixel addresses into a sampling address. The use of a conversion table enables an efficient sampling.

The invention will now be described with reference to the annexed drawings illustrating a preferred embodiment of a detector according to the invention and also illustrating the landscape in which the detector operates. In the drawings:
figure 1 illustrates schematically a detector according to the present invention;
figures 2a and 2b illustrate a section in a traffic zone monitored by a detector according to the invention;
figure 3 illustrates the memory set-up for storing the pixel-data values; and
figures 4 and 5 illustrate the resulting pixel-data value concept.

In the drawings, a same reference sign has been allocated to a same or analogous element.

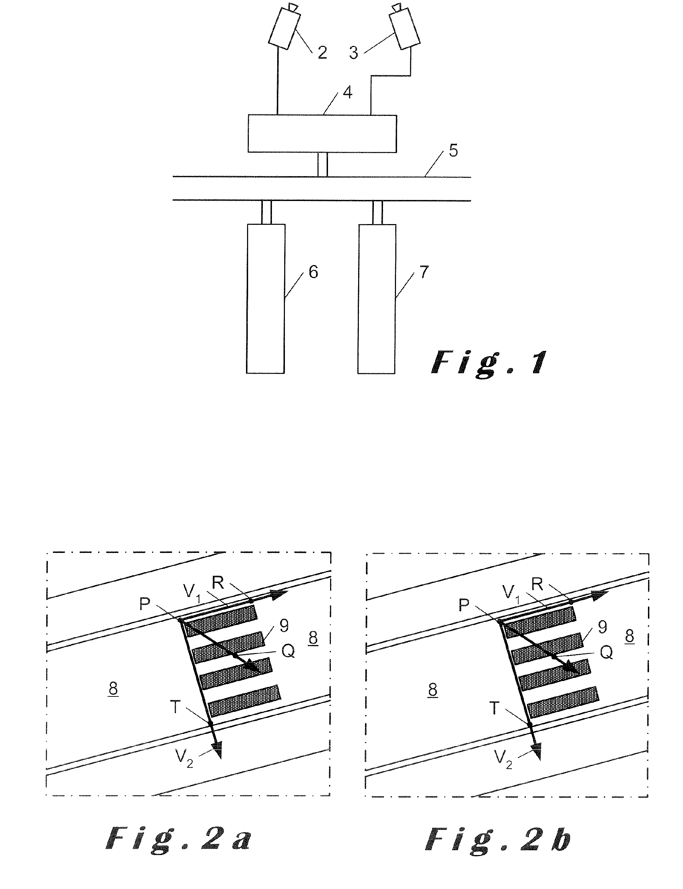

Figure 1 shows schematically a detector for detecting traffic participants. The detector is in particular developed for detecting pedestrians walking on a street, such as for example a crosswalk as illustrated in figure 2. It will of course be clear that the invention is not limited to the detection of pedestrians and can be applied to different types of traffic participants such as cyclists, cars, trucks, etc..

The detector 1, illustrated in figure 1 comprises a first 2 and a second 3 camera provided to be placed outside and record images of a traffic zone 8 (figure 2) to be monitored. Each camera is connected to an interface 4, which connection can be with a wire or wireless. The interface is connected to a bus 5 to which a memory 6 and a data processing unit 7 are also connected. The cameras 2 and 3 are set up in such a manner that they are provided for operating in stereovision and output respectively first and second pixel-data relating to recorded traffic pictures of the monitored traffic zone 8. Stereovision is a known technique and is for example described in the article of Helm J.D et al "Improved three-dimensional image correlation for surface displacement measurement", published in "Optical engineering society of photo-optical instrumentation engineers, Bellingham US Vol 35 n 7, July 1996 pages 1911 - 1920". This article is hereby incorporated by reference. Stereovision enables, by using two cameras placed under an angle with respect to each other, to obtain three-dimensional co-ordinates of an object despite the fact that two dimensional images are recorded.

Stereovision requires a calibration process that handles the relation between the first or left camera 2 and the second or right camera 3. This relation is defined by the intrinsic and extrinsic parameters of the camera. The intrinsic parameters determine the internal optical and geometrical properties of the camera, whereas the extrinsic parameters define the position and orientation of the cameras towards the reference. In the example illustrated in figure 2, these extrinsic parameters are the crosswalk 9. The extrinsic parameters also describe the relation between the left (2) and right (3) camera's relative position and are formed by a 3 x 3 rotation matrix and a 1 x 3 translation vector. An example of such matrices is given by the afore mentioned article or by the work of Janne Heikkilä and Olli Silven "Calibration procedure for short focal length off-the-shelf CCD cameras", published in 13th International Conference on Pattern Recognition (ICPR '96), Volume 1, page 166. The calibration process enables to determine the camera parameters. Once they have been determined, it becomes possible to convert a point in the world reference frame, in this example the crosswalk, into its pixels co-ordinates in the recorded image.

Using the calibration it is possible for each recorded image by the first and second camera to calculate the three dimensional co-ordinates of a point in the monitored traffic zone section when the match is found in both images. Figures 2 a and 2 b illustrate the matches found at the points P and R in the first and second image. This signifies that now the world co-ordinates of those points are known.

In order now to delimit a predetermined section in the traffic zone, the detector according to the invention is provided for storing in memory 6 picture parameters delimiting this predetermined section. One of the picture parameters is formed by NxM pixels enabling to form an image of the section, which NxM pixels are part of the first respectively the second image. The NxM pixels thus form a pixel matrix of adjacent pixels in each of the first and second images. The picture parameters also comprise a sampling pattern defining a sequence of pixels to be sampled within said section of the traffic zone in such a manner that an (i,j)th (1≤i≤N, 1≤j≤M) to be sampled pixel in the first and second pixel-data corresponds to a same (i,j)th geographical location within the considered section. According to a preferred embodiment of the invention the sampling pattern comprises a first ν̅1̅ and a second ν̅2̅ vector as illustrated in figures 2a and 2b. The first vector ν̅1̅ has for example its origin in point P and extends towards point T, whereas the second vector ν̅2̅ has for example also its origin in point P and extends towards point R. The vectors ν̅1̅ and ν̅2̅ thus form a normalised reference frame in the section of the traffic zone to be monitored. This enables now to identify a geographical location corresponding to a position in the image by means of a vector co-ordinate set v1ᵢ,v2ⱼ in the normalised reference frame. A point i,j will thus have the co-ordinates v1i, v2j in the normalised reference frame.

The detector 1 further comprises sampling means, for example formed by a program, operating under control of the processor 7. The sampling means are provided for sampling the first and second pixel-data according to the sampling pattern and output for each (i,j)th sampled pixel within said first respectively said second pixel-data a first and second (i,j)th pixel-data value, indicating a pixel value for the pixel-data at the (i,j)th geographical location. In the embodiment of the vector set up, the pixel-data is vector co-ordinate-wise sampled by sampling the first and second pixel-data supplied by the images recorded by the first and second camera respectively.

The sampling means are connected to the memory, which comprises a first and a second data-field and is provided for storing therein said first and second pixel-data values generated by the sampling means. The detector further comprises deviation determining means connected to the memory and provided for pixel-wise or pixel-group-wise determining a deviation between the first and second pixel-data value and forming thereby a resulting pixel-data value. The deviation determining means are connected to an analyser provided for analysing the resulting pixel-data value in order to apply a threshold operation on the resulting pixel-data value and output a threshold signal upon detecting a presence of resulting pixel-data value matching said threshold operation.

In the embodiment of the vector co-ordinates, the sampling means output for each vector co-ordinate set v1ᵢ,v2ⱼ a first and second pixel-data value indicating the pixel value of the pixel-data at a position corresponding to the sampled vector co-ordinate set. So, for example for the point Q the sampling means will output the pixel-data value recorded by the first and second camera for that particular location corresponding to that particular point in the image.

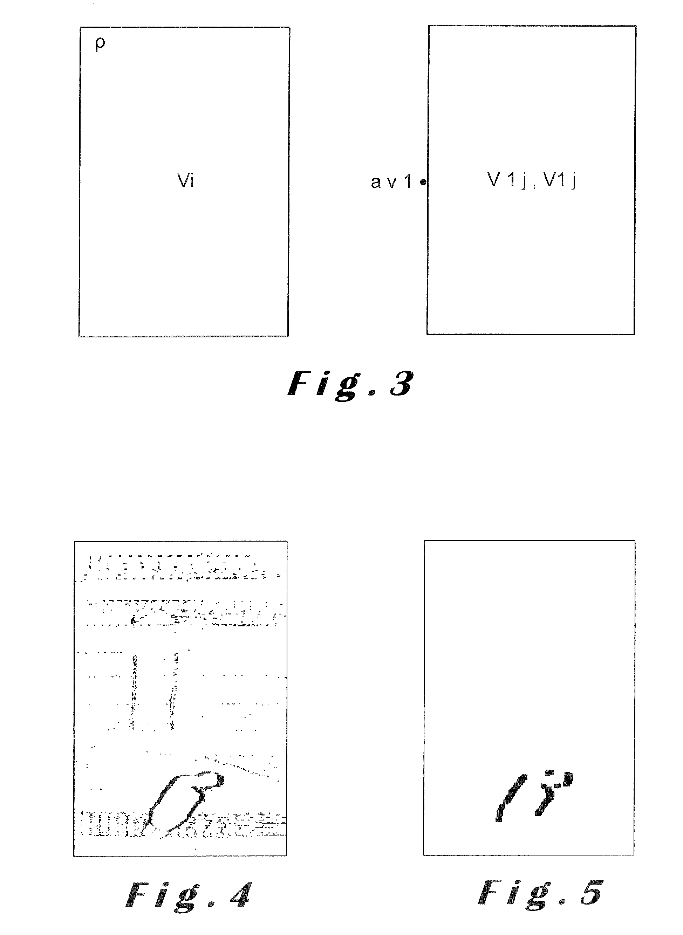

In practice, such sampling is for example realised by using a conversion table built up in accordance with the sampling pattern and stored in memory 6. This conversion table converts the pixel addresses allocated to first and second image pixels recorded by the first and second camera into sampling addresses on the basis of the sampling pattern. In the embodiment of the vector co-ordinates, vector co-ordinates addresses are formed and stored. Indeed, the pixel-data recorded by the first and second camera is temporarily stored in the memory at pixel addresses corresponding to the location of the pixel in the image. The memory comprises a further field comprising first and second data fields where the pixel-data values are stored according to the sampling addresses. Figure 3 illustrates such further fields for the first ad second image. At an address vᵢᵢ there is stored the pixel-data value of location i,j. By converting the address, using the conversion table, the address in the further field is obtained and the pixel-data value stored at the converted image address is extracted and stored at this sampling address. In such a manner, the first and second pixel-data values are stored in the first respectively the second data field.

The deviation determining means are for example formed by subtracting means, which could also be formed by a program running on the processor 7. The subtracting means are connected to the memory and are provided for subtracting from one another co-ordinate-wise the first and second pixel-data value stored in the first and second data field. So, for example the pixel-data value (v1ᵢ,v2ⱼ)1 of the first data field and originating from the first image is subtracted from the pixel-data value (v1ᵢ,v2ⱼ)2 of the second data field and originating from the second image. If at this vector point v1ᵢ,v2ⱼ, there is no three dimensional object, such as a pedestrian, then the pixel-data value at these vector points is substantially the same and the subtraction results in a value substantially equal to zero. When on the other hand there is a three dimensional object and due to the stereovision, the pixel-data value at these vector points is different and the subtraction value results in a value different from zero. As the first and second camera make an angle with respect to one another, the pixel value data for a same point is different if there is a three dimensional object.

The subtracting means are connected to the analyser, which is for example formed by a program executed by the processor 7. The analyser is provided for analysing the resulting pixel-data value output by the subtracting means. The analyser thereby verifies whether the resulting pixel-data value comprises pixel-data value having a pixel value higher than a predetermined threshold value. The latter is for example determined by pixel-data value corresponding to a pedestrian if the detector has to monitor a crosswalk. When the resulting pixel-data value is higher than the predetermined threshold value, then the treshold signal is output by the analyser. In the example of the crosswalk monitoring, this signifies that a pedestrian has been detected.

The result of the deviation determining means is illustrated in figure 4. Indeed, all the pixels in the chosen detection area are presumed to be on the ground plane. If a pixel, such as one coming from the presence of a pedestrian is not on the ground it is falsely projected and introduces a shift in the recorded images as shown in figure 4. The result of the analyser is shown in figure 5.

The memory further comprises a subfield for storing therein, under control of the threshold signal, output by the analyser, the vector co-ordinate set belonging to the resulting pixel-data value higher than the threshold value. Now the analyser can verify whether the vector co-ordinate sets stored in the sub-field belong to neighbouring vector co-ordinate sets, thus indicating that they belong to a same object. If the vector co-ordinate set in the sub-field belongs to neighbouring vector co-ordinates, a confirmation signal will be output by the analyser thereby reducing the error probability.

It should be noted that the higher an object in the section to be monitored is, the bigger will be the introduced shift in the recorded image. By determining the number of pixels of the shift, it is possible to determine a relation towards the height of the object. Since the calibration is made for the groundplane (in this case, the zebra-crossing), there is no shift for objects without real height. So, zero shift means zero height. There is thus a linear relation between the amount of shift (determined by the number of pixels in detection) and the height of the object. In such a manner, the resulting pixel-data value obtained by the deviation determination is directly proportional to the height of the detected object. The detector can thus also use this information to output a height data indicative for the height of the detected object.

## Claims

1. A detector for detecting traffic participants, in particular pedestrians, said detector comprising a first and a second camera provided for operating in stereovision and output respectively first and second pixel-data relating to recorded traffic pictures of a monitored traffic zone, **characterised in that** said detector comprises a memory provided for storing picture parameters delimiting a predetermined section within said traffic zone, said section being covered by NxM pixels, said picture parameters further comprise a sampling pattern defining a sequence of pixels to be sampled within said traffic zone in such a manner that an (i,j)th (1≤i≤N, 1≤j≤M) to be sampled pixel in said first and second pixel-data corresponds to a same (i,j)th geographical location within said section, said detector further comprises sampling means provided for sampling said first and second pixel-data according to said sampling pattern and output for each (i,j)th sampled pixel within said first respectively said second pixel-data a first and second (i,j)th pixel-data value, indicating a pixel value for the pixel-data at the (i,j)th geographical location, said sampling means being connected to said memory, which comprises a first and a second data-field and is provided for storing therein said first and second pixel-data values, said detector further comprises deviation determining means connected to said memory and provided for pixel-wise determining a deviation between said first and second pixel-data value and forming thereby a resulting pixel-data value, said deviation determining means being connected to an analyser provided for analysing said resulting pixel-data value in order to apply a threshold operation on said resulting pixel-data value and output a threshold signal upon detecting a presence of resulting pixel-data value matching said threshold operation.

2. The detector as claimed in claim 1, **characterised in that** said sampling pattern comprises a first and a second vector (ν̅1̅, ν̅2̅) defined in said section and forming a normalised reference frame in said section in such a manner that said (i,j)th geographical position is identifiable by a vector co-ordinate set v1ᵢ,v2ⱼ in said normalised reference frame, and wherein said sampling means are provided for vector co-ordinate-wise sampling said first and second pixel-data and output for each vector co-ordinate set v1ᵢ,v2ⱼ said first and second pixel-data value, indicating said pixel value for the pixel-data at the position corresponding to said vector co-ordinate set.

3. The detector as claimed in claim 1 or 2, **characterised in that** said deviation determining means comprises subtracting means provided for subtracting from each other said first and second (i,j)th pixel-data value for forming said -resulting pixel-data value, said analyser being provided for analysing said resulting pixel-data value in order to verify if said resulting pixel data value comprises pixel data value having a pixel value higher than a predetermined threshold value and output said threshold signal upon detecting a presence of resulting pixel data value higher than said threshold value.

4. The detector as claimed in any one of the claims 1 to 3, **characterised in that** said memory comprises a sub-field provided for storing therein under control of said threshold signal -each time the (i,j)th location associated to said resulting pixel-data value having caused said matching of said threshold operation, said analyser being further provided for verifying if -within an area formed by i±k and j±k (1≤k≤K) locations situated around the (i,j)th location stored in said sub-field there are locations stored in said sub-field -and for outputting a confirmation signal if -there are such locations stored in said sub-field.

5. The detector as claimed in any one of the claims 1 to 4, **characterised in that** said detector comprises an image memory provided for storing said first and second pixel-data according to pixel addresses allocated to said image, said sampling means comprises a conversion table provided for converting said pixel address into a sampling address formed on the basis of said sample pattern, said sampling means being provided for executing said sampling by converting the pixel addresses into a sampling address.

6. The detector as claimed in any one of the claims 1 to 5, **characterised in that** said detector comprises height determination means provided for outputting a height signal based on the resulting pixel-data value.
